Europäisches Patentamt

**European Patent Office**

Office européen des brevets

(11) Veröffentlichungsnummer: **0 086 959**
**A1**

(12) **EUROPÄISCHE PATENTANMELDUNG**

(21) Anmeldenummer: 83100509.5

(22) Anmeldetag: 21.01.83

(51) Int. Cl.³: **B 60 R 13/06**

(30) Priorität: 18.02.82 DE 3205743

(43) Veröffentlichungstag der Anmeldung:
31.08.83 Patentblatt 83/35

(84) Benannte Vertragsstaaten:
BE DE FR GB IT LU NL SE

(71) Anmelder: Schlegel GmbH
Bredowstraße 33
D-2000 Hamburg 74(DE)

(72) Erfinder: Thies, Georg, Ing. (grad.)
Barsbütteler Landstrasse 16
D-2000 Barsbüttel-Willinghusen(DE)

(74) Vertreter: Glawe, Delfs, Moll & Partner Patentanwälte
Postfach 26 01 62 Liebherrstrasse 20
D-8000 München 26(DE)

(54) Dichtstreifen aus thermoplastischem Werkstoff mit einer metallischen Verstärkungseinlage.

(57) Ein Dichtstreifen umfaßt einen biegesteiferen halteabschnitt und einen flexibleren Dichtabschnitt. Er besteht aus nachgiebigem, thermoplastischem Werkstoff mit einer metallischen Verstärkungseinlage. Im Halteabschnitt (1) und im Dichtabschnitt (2) sind gesonderte metallische Verstärkungseinlagen enthalten. Diese sind dadurch miteinander kraftübertragend verbunden, daß sie in einem verbindungabschnitt (4), der einen Teil des Halteabschnitts (1) bilden kann, durch den thermoplastischen Werkstoff gemeinsam ummantelt sind. Dies erreicht man dadurch, daß man die beiden metallischen Einlagen mit einem Teil ihres Querschnitts aneinanderliegend, beispielsweise im Durchlauf durch eine Extruderdüse, ummantelt.

Fig.1

COMPLETE DOCUMENT

GLAWE, DELFS, MOLL & PARTNER

PATENTANWÄLTE **0086959**

ZUGELASSENE VERTRETER BEIM EUROPÄISCHEN PATENTAMT

RICHARD GLAWE
DR.-ING.

KLAUS DELFS
DIPL.-ING.

ULRICH MENGDEHL
DIPL.-CHEM. DR. RER. NAT.

WALTER MOLL
DIPL.-PHYS. DR. RER. NAT.
ÖFF. BEST. DOLMETSCHER

HEINRICH NIEBUHR
DIPL.-PHYS. DR. PHIL. HABIL

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUM-
CHAUSSEE 58
TEL (040) 4 10 20 08
TELEX 21 29 21 SPEZ

HAMBURG

Schlegel GmbH,
Hamburg

Dichtstreifen aus thermoplastischem Werkstoff mit
einer metallischen Verstärkungseinlage

p 10708/82 EU
D/be

Beschreibung

Die Erfindung bezieht sich auf einen Dichtstreifen, der im
Querschnitt aus einem biegesteiferen Halteabschnitt und
einem flexibleren Dichtabschnitt zusammengesetzt ist, die
zur Übertragung der Dichtkräfte vom Dichtabschnitt auf den
Halteabschnitt fest miteinander verbunden sind und aus
thermoplastischem Werkstoff mit einer metallischen Verstärkungseinlage bestehen.

Die Erfindung bezieht sich insbesondere auf solche Dichtstreifen, bei denen der Halteabschnitt hohe Formbeständigkeit
und Haltefestigkeit aufweisen muß, während der Dichtabschnitt
weich ist und auch nach längerer Gebrauchsdauer volle Elastizität aufweist. Ein Beispiel dafür bilden Kraftfahrzeug-
Türdichtungen, wie sie in der US-Patentschrift 4 010 573
gezeigt sind, die aus einem im Querschnitt U-förmigen Halteabschnitt aus thermoplastischem Werkstoff mit metallischer
Verstärkungseinlage und einem mit diesem verklebten Dichtabschnitt aus Gummi bestehen. Thermoplastische Werkstoffe haben
sich für dauerelastische Dichtabschnitte nicht bewährt, weil

...2

sie nach längerer Gebrauchsdauer nicht mehr die volle elastische Rückstellkraft zeigen. Gummiwerkstoffe sind jedoch aufwendiger in Material und Formgebung als thermoplastische Werkstoffe. Auch ist ihre Verbindung mit dem thermoplastischen Werkstoff des Halteabschnitts ein zusätzlicher und aufwendiger Arbeitsgang. Dieser kann zwar dadurch vermieden werden, daß auch für den Halteabschnitt statt des thermoplastischen Werkstoffs der Gummiwerkstoff verwendet wird und der Halteabschnitt und der Dichtabschnitt in einem Arbeitgang stranggepreßt werden; jedoch ist es im allgemeinem im Hinblick auf die Gebrauchseigenschaften und die Materialkosten zweckmäßiger, im Halteabschnitt thermoplastischen Werkstoff und im Dichtabschnitt Gummi zu verwenden.

Aus der US-Patentschrift 3 788 008 ist es bekannt, die Dauerelastizität einer aus thermoplastischem Werkstoff bestehenden Dichtungslippe durch eine elastische Metalleinlage zu sichern. Es handelt sich dabei um dieselbe Metalleinlage, die auch im Halteabschnitt des Dichtstreifens vorgesehen ist. Da jedoch deren Elastizität auf die gewünschten weichen Eigenschaften der Dichtlippe eingestellt ist, kann sie dem Halteteil in vielen Fällen keine hinreichende Steifigkeit verleihen. Diese Anordnung ist deshalb ungeeignet für Kraftfahrzeug-Türdichtungen und ähnliche Anwendungsfälle.

Der Erfindung liegt daher die Aufgabe zugrunde, einen Dichtstreifen der eingangs genannten Art zu schaffen, der im Halteabschnitt und im Dichtabschnitt beträchtliche Unterschiede der mechanischen Eigenschaften ermöglicht und trotzdem ohne Verwendung von Gummimaterial hinreichende Elastizität des Dichtabschnitts ermöglicht.

Die erfindungsgemäße Lösung besteht darin, daß der Dichtabschnitt eine von der Verstärkungseinlage des Halteabschnitts
gesonderte, flexiblere Verstärkungseinlage enthält und mit
dieser dadurch kraftübertragend verbunden ist, daß Teile der
beiden Verstärkungseinlagen innerhalb eines Verbindungsabschnitts in geringem Abstand voneinander von dem thermoplastischen Werkstoff ummantelt sind.

Die Erfindung ermöglicht es, für den Halteabschnitt und für
den Dichtabschnitt metallische Einlagen mit unterschiedlichen
mechanischen Eigenschaften zu wählen und dadurch  - unter Berücksichtigung der jeweiligen mechanischen Eigenschaften des
in den beiden Abschnitten verwendeten thermoplastischen
Materials  - die mechanischen Eigenschaften des Halteabschnitts und des Dichtabschnitts nach Belieben einzustellen.
Dabei ist es nicht erforderlich, hohen Aufwand für die sichere
Verbindung zwischen den beiden, die Kräfte vom Dichtabschnitt
auf den Halteabschnitt übertragenden Einlagen zu treiben, weil
sich diese Verbindung selbsttätig ergibt, wenn hinreichend
große Abschnitte dieser Einlagen in geringem Abstand voneinander und auf einer gewissen Länge gemeinsam von dem thermoplastischen Kunststoff ummantelt sind. Die Herstellung ist
einfach, weil statt der bislang üblichen  einen Einlage in
gleicher Technik nunmehr zwei Einlagen mit dem zu formenden
thermoplastischen Werkstoff durch eine Extruderdüse geführt
werden.

Zwar ist es an sich bekannt  (DE-OS 28 18 225) zwei Verstärkungseinlagen innerhalb eines und desselben polymeren Profilteils
anzuordnen; jedoch haben dabei die beiden Verstärkungseinlagen keine unterschiedlichen mechanischen Eigenschaften
und brauchen sie auch nicht zur Übertragung von Dichtkräften starr miteinander verbunden zu sein.

Es ist auch bekannt (FR-PS 1 467 128) in einem Kunststoffprofil zur Verbindung der Kanten zweier benachbarter Platten
zwei Halteabschnitte vorzusehen, die jeweils eine metallische Verstärkungseinlage enthalten; jedoch haben die Verstärkungseinlagen innerhalb des Kunststoffprofils großen
Abstand voneinander, so daß nicht damit gerechnet werden kann,
daß eine starre Kraftübertragung zwischen ihnen stattfinden
kann, wie es bei der Übertragung der Dichtkräfte von einem
Dichtabschnitt auf den zugehörigen Halteabschnitt erforderlich ist.

Unter einem Dichtstreifen ist im Sinne der Erfindung ein Profilstreifen zu verstehen, der im allgemeinen über seine Länge
konstante Querschnittsgestalt besitzt. Der Halteabschnitt
kann unterschiedlich geformt sein; jedoch sind vornehmlich
solche Halteabschnitte gemeint, die in der Lage sind, beträchtliche Biegemomente um eine zur Streifenlängsrichtung
parallele Achse aufzunehmen. Unter den Dichtkräften sind in
erster Linie diejenigen zu verstehen, die in einer Querschnittsebene des Dichtstreifens wirken. Dabei wird vorausgesetzt,
daß alle Kräfte überwiegend von der metallischen Einlage aufgenommen werden und von Einlage zu Einlage ohne wesentliche
Formänderung innerhalb des Verbindungsabschnitts übertragen
werden müssen.

Die im wesentliche starre Kraftübertragung von der Verstärkungseinlage des Dichtabschnitts auf die Verstärkungseinlage des
Halteabschnitts wird am besten gewährleistet, wenn die Einlagenteile innerhalb des Verbindungsabschnitts mit möglichst
geringem Abstand und möglichst großer Länge aneinander liegen.
Jedenfalls soll der mittlere Abstand der Einlagen voneinander innerhalb des Verbindungsabschnitts geringer sein als ein
Drittel der Länge des Verbindungsabschnitts. Der mittlere
Abstand der Einlagen voneinander soll ferner möglichst
nicht größer sein als etwa das dreifache der Dicke der jeweils stärkeren Verstärkungseinlage. Es ist auch zweckmäßig, wenn die Verstärkungseinlagen innerhalb des Verbindungsabschnitts im wesentlichen parallel zueinander verlaufen.
Zwar ist es im Rahmen der Erfindung möglich, daß der Halteabschnitt und der Dichtabschnitt aus Werkstoff unterschiedlicher Härte bestehen; dies schließt jedoch nicht aus, daß
diese beiden Abschnitte einstückig aus dem thermoplastischen
Werkstoff bestehen, in dem die Werkstoffbereiche unterschiedlicher Härte durch gemeinsame Extrusion miteinander verschweißt und gleichzeitig geformt sind. Diese Technik des
gleichzeitigen Extrudierens von im wesentlichen gleichen,
jedenfalls miteinander verschweißbaren, Werkstoffen unterschiedlicher Härte ist bekannt.

Zweckmäßigerweise bildet der Verbindungsabschnitt oder
wenigstens ein Teil davon einen Teil des Halteabschnitts.
Dies ist deshalb zweckmäßig, weil der Verbindungsabschnitt
infolge seiner doppelten Armierung mit Verstärkungseinlagen
im allgemeinen besonders hohe Biegefestigkeit aufweist.
Wenn der Halteabschnitt im Querschnitt U-förmig gestaltet
ist, kann einer der beiden Schenkel des Halteabschnitts als
Verbindungsabschnitt verwendet werden. Statt dessen ist es
auch möglich, den Steg zwischen den beiden Schenkeln als
Verbindungsabschnitt auszubilden.

Die erwähnte, besonders hohe Biegesteifigkeit des Verbindungsabschnitts kann man konstruktiv gezielt nutzen, wenn es erforderlich ist, zwischen dem Halteabschnitt und dem Dichtabschnitt oder als Teil eines dieser Abschnitte einen Abschnitt zu schaffen, der besonders hohe Biegefestigkeit aufweisen
soll. Während der Verbindungsabschnitt sonst nur so groß
bemessen wird, wie dies im Hinblick auf die erforderliche
Verbindungsfestigkeit erforderlich ist, kann er in diesem
Fall ausgedehnter sein und eine Formgebung aufweisen, die
abweichend von der Verbindungsfunktion durch die konstruktive
Funktion des besonderen Abschnitts hoher Biegefestigkeit
bestimmt ist.

Als Verstärkungseinlagen im Zusammenhang der Erfindung
eignen sich besonders solche bekannten Verstärkungseinlagen,
die von einem zickzack-förmig gebogenen Metalldraht gebildet sind. Diese lassen sich nämlich leichter in geringem
Abstand voneinander und mit hoher Verbindungsfestigkeit in
dem Werkstoff des Verbindungsabschnitts verankern als bekannte aus Blech gestanzte Verstärkungseinlagen, die zwar
im Prinzip ebenfalls verwendbar sind, die aber infolge ihrer
ausgedehnten parallelen Oberflächen in manchen Fällen nicht
hinreichend gleichmäßig von verbindendem Werkstoff umflossen
werden und dann nicht genügend fest aneinander gebunden sind.
Dies gilt insbesondere dann, wenn sie innerhalb des Verbindungsabschnitts zufälligerweise so angeordnet sind, daß
sie einander berühren oder nur geringen Abstand voneinander
haben und undurchbrochene Teile der einen Einlage jeweils
die ihnen  gegenüberliegenden Ausstanzungen der anderen Einlage abdecken. Zwar ist es im allgemeinen nicht erforderlich,
die Einlagen in ihrem Verbindungsbereich anders als durch
den thermoplastischen Werkstoff des Verbindungsabschnitts
miteinander zu verbinden. Wenn es sich jedoch um Einlagen aus
gebogenem Draht handelt, dessen Windungen durch flexible
Stränge miteinander verbunden sind, bevor sie mit dem thermoplastischem Werkstoff ummantelt werden, kann vorgesehen sein,
daß die flexiblen Stränge im Verbindungsbereich nicht nur die benachbarten Windungen jeweils einer Einlage, sondern beider Einlagen miteinander verbinden. Dies kann nämlich manchmal ohne Mehraufwand dadurch geschehen, daß die beiden Einlagen in einer Maschine oder in kombinierten Maschinen gebogen und mit flexiblen Strängen versehen werden. Die Verbindung der beiden Einlagen durch die flexiblen Stränge ergibt meist keine nennenswerte Verbesserung ihrer Verbindungsfestigkeit innerhalb des Verbindungsabschnitts, weil die Festigkeit des umhüllenden Werkstoffs gegenüber der Festigkeit der flexiblen Stränge überwiegt. Jedoch kann durch die vorherige Verbindung der beiden Einlagen deren Führung durch die Extruderdüse vereinfacht und die Sicherheit bezüglich ihrer genauen gegenseitigen, geringen Abstand aufweisenden Lage vergrößert werden.

Die Erfindung wird im folgenden näher unter Bezugnahme auf die Zeichnung erläutert, die vorteilhafte Ausführungsbeispiele veranschaulichen. Darin zeigen:

Fig. 1          die Querschnittsgestalt einer ersten Ausführungsform,

Fig. 2          den Dichtstreifen gemäß Fig. 1 in der Form, in der er extrudiert wird,

Fig. 3          eine zweite Ausführungsform,

Fig. 4          einen Längsschnitt durch eine erste Ausführungsform eines Verbindungsabschnitts und

Fig. 5          einen Querschnitt durch eine zweite Ausführungsform eines Verbindungsabschnitts.

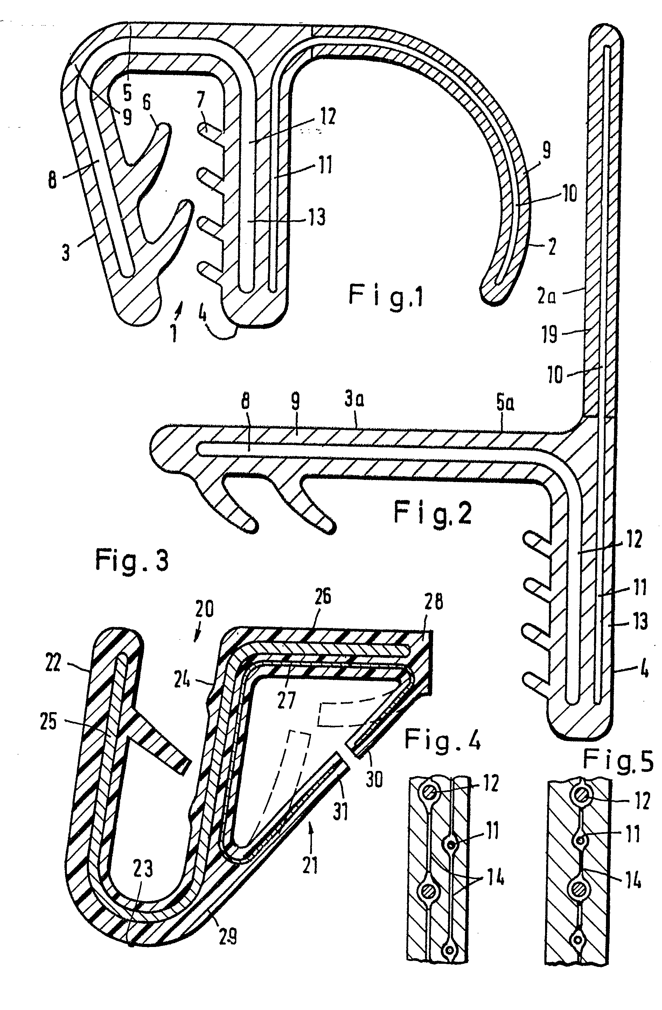

Der Dichtstreifen gemäß Fig. 1 besteht aus einem Halteabschnitt 1 und dem als Lippe 2 ausgebildeten Dichtabschnitt. Der Halteabschnitt 1 besteht aus zwei Schenkeln 3
und 4, die miteinander durch einen Steg 5 verbunden sind.
Die Schenkel 3, 4 weisen auf den Innenflächen Halterippen 6,
7 auf, die zur besseren Haftung an einem Karosserieflansch
dienen, auf den der Halteabschnitt 1 aufgeschoben werden soll.
Die erforderliche Haltekraft erhält der Halteabschnitt durch
eine metallische Verstärkungseinlage 8, die beide Schenkel 3,
4 und den Steg 5 durchläuft und beispielsweise aus zickzack-förmig gebogenem Stahldraht besteht, dessen benachbarte
Windungen durch flexible textile Fäden miteinander verbunden
und dadurch im noch nicht ummantelten Zustand in ihrer gegenseitigen Lage gesichert sind, wie dies in der US-Patentschrift 3 198 689 gezeigt ist. Die Einlage ist von thermoplastischem Werkstoff wie beispielsweise Polyvinylchlorid
in der bei Automobil-Kantenschutzprofilen üblichen Härteeinstellung mit dem in der Zeichnung angegebenen Profil ummantelt.

Die Dichtlippe 2 geht vom Halteabschnitt 1 im Bereich des
Übergangs zwischen dem Schenkel 4 und dem Steg 5 ab. Sie
besteht aus im wesentlichen demselben Werkstoff, allerdings
in einer etwas weicheren Härteeinstellung. Der Unterschied
ist durch engere Schraffur angedeutet. Das den Halteabschnitt 1
und die Dichtlippe 2 bildende thermoplastische Material ist
in bekannter Technik gemeinsam extrudiert, wobei die beiden
Materialqualitäten im Übergangsbereich fest miteinander verschweißt sind.

Die Dichtlippe 2 enthält eine Verstärkungseinlage 10 aus
zickzack-förmig gebogenem Federstahldraht geringerer Dicke
als die Verstärkungseinlage 8. Die Stärke der Verstärkungseinlage 10 und die Dicke des sie umgebenden thermoplastischen Materials sind so gewählt, daß sich bei der zu
erwartenden Verformung der Dichtlippe die gewünschte Dichtkraft und Nachgiebigkeit ergibt.

Die Verstärkungseinlage 10 verläuft mit ihrem Teil 11
innerhalb des Schenkels 4 des Halteabschnitts 1 parallel
und eng benachbart zu dem Teil 12 der Verstärkungseinlage 8
des Halteabschnitts. Die Teile 11 und 12 der beiden Verstärkungseinlagen sind somit gemeinsam von dem thermoplastischen Werkstoff 13 des Schenkels 4 ummantelt, so daß dieser
Werkstoff die Übertragung der auf die Dichtlippe 2 wirkenden
Kraft über den Teil 11 der Verstärkungseinlage 10 auf
den Teil 12 der Verstärkungseinlage 8 übernehmen kann.
Der Schenkel 4 bildet auf diese Weise den Verbindungsabschnitt für die Verstärkungseinlagen.

Die Ummantelung der Verstärkungseinlage 8, 10 erfolgt in
einem bekannten Extrusionsprozeß, in welchem die als quasi
endlose Streifen ausgebildeten Verstärkungseinlagen durch
die Extruderdüse hindurchgeführt werden, welcher auch der
thermoplastische Werkstoff 9, 13 zugeführt wird. Bei der
Formgebung in der Extruderdüse braucht die Anordnung noch
nicht ihre endgültige Querschnittsgestalt gemäß Fig. 1 zu
haben. Bevorzugt wird im allgemeinen die Extrusion bei
möglichst einfacher Querschnittsgestalt vorzunehmen und erst
anschließend des Halteabschnitt und den Dichtabschnitt zu
biegen. Dies wird anhand von Fig. 2 erläutert.

Man erkennt dort den Dichtstreifen gemäß Fig. 1 im Querschnitt in derjenigen Gestalt, die er unmittelbar nach der

...10

Extrusion innehat. Derjenige Querschnittsteil 2a, der
später die Dichtlippe 2 bilden soll, fluchtet mit demjenigen Querschnittsteil 3a, 5a der später den Schenkel 3
und den Steg 5 des Halteabschnitts bilden soll. Später werden
diese Teile so gebogen, daß sich die in Fig. 1 dargestellte
Querschnittsform ergibt. Das Extrusionsprofil ist so gewählt, daß die Verstärkungseinlage 10 in ebener Form durch
die Extruderdüse geführt werden kann, während die Verstärkungseinlage 8 zuvor im Winkel profiliert wurde. Statt dessen
könnte selbstverständlich auch umgekehrt die Verstärkungseinlage 8 eben und die Verstärkungseinlage 10 im Winkel
vorprofiliert sein oder ganz andere Winkelkonfigurationen
gewählt sein. Ferner erkennt man, daß die Verstärkungseinlage 10
der Dichtlippe 2 statt in dem Schenkel 4 beispielsweise
auch im Steg 5 neben der Einlage 8 des Halteabschnitts verankert sein könnte.

In Fig. 1 und 2 sind die Teile 11 und 12 der Verstärkungseinlagen innerhalb des Schenkels 4 in einem gewissen Abstand voneinander angeordnet, der von dem thermoplastischen
Werkstoff ausgefüllt ist. Im Vergleich mit der im Querschnitt
gemessenen Länge des Verbindungsabschnitts ist dieser Abstand jedoch klein. Er beträgt nämlich weniger als ein
Zehntel dieser Länge. Dabei ergibt sich in einem in Längsrichtung des Dichtungsstreifens geführten Querschnitt durch
den Halteabschnitt das in Fig. 4 gezeigte Bild, wo man
die einzelnen Drähte 12 bzw. 11 der Einlagen erkennt, die
untereinander durch Fäden 14 - jeweils gesondert - verbunden sind.

Es besteht nicht nur die Möglichkeit, die Einlagen innerhalb
des Verbindungsabschnitts mit geringerem Abstand als in

Fig. 4 anzuordnen, sondern sie können auch praktisch
ohne Abstand vorgesehen werden,
wenn diejenigen Teile der Einlagen, die später gemeinsam
von dem Verbindungsabschnitt ummantelt werden sollen, durch
die textilen Fäden oder andere zur vorläufigen Verbindung
der Drähte benutzte Stränge miteinander verflochten sind.
Dann ergibt sich das Bild gemäß Fig. 5.

Das Ausführungsbeispiel gemäß Fig. 3 umfaßt einen Halteabschnitt 20 und einen Dichtabschnitt 21. Der Halteabschnitt ist aus einem Schenkel 22, einem Steg 23 und
einem Schenkel 24 im Querschnitt U-förmig aufgebaut und
enthält eine verstärkende Stahldrahteinlage 25, wie dies
bei dem vorhergehenden Beispiel erläutert wurde. Er ist
auch zur Befestigung an einem Kraftfahrzeug-Karosserieflansch
vorgesehen. An das freie Ende des Schenkels 24 schließt
sich etwa in rechtem Winkel ein Arm 26 an, in welchen auch
die Verstärkungseinlage 25 einstückig weitergeführt ist.
Die Dicke des thermoplastischen Materials des Arms 26
gleicht etwa derjenigen der Schenkel 22, 24 und des Stegs 23.

Im Schenkel 24 und Arm 26 ist parallel zu der Verstärkungseinlage 25 eine zweite Verstärkungseinlage 27 aus dünnerem
Federstahldraht angeordnet. In einem in Längsrichtung des
Streifens gelegten Schnitt durch diese Teile hat man sich
die Anordnung so vorzustellen, wie dies in Fig. 4 angegeben
ist. Da die Verstärkungseinlagen 25, 27 einen Abstand voneinander aufweisen, besitzen der Schenkel 24 und der Arm 26
eine ungewöhnlich große Biegesteifigkeit. Das liegt daran,
daß der Biegewiderstand eines Bauteils der dritten Potenz
des Mittenabstands seiner am weitesten von der Biegemitte
entfernten Teile proportional ist. Wegen des hohen Elastizitätsmoduls von Stahl im Vergleich zu Kunststoff kommt es im vorliegenden Fall praktisch nur auf die Verstärkungseinlagen an. Wegen der räumlichen Distanzierung der beiden
Verstärkungseinlagen ist der genannte maximale Mittenabstand
im Schenkel 24 und im Arm 26 wesentlich größer als in den
übrigen Teilen des Halteabschnitts. Darauf geht der ungewöhnlich große Biegewiderstand des Schenkels 24 und des
Arms 26 gegenüber den in der Querschnittsebene wirkenden Kräften
und Momenten zurück. Man erkennt, daß dieses Prinzip bei
der erfindungsgemäßen Verbindung zweier Verstärkungseinlagen
innerhalb eines Kunststoffprofils große Konstruktionsfreiheit
bei der Bildung von Querschnittsteilen unterchiedlichen Biegewiderstands gewährt.

An das freie Ende 28 des Arms 26 und an den Übergangsbereich 29 zwischen dem Steg 23 und dem Schenkel 24 schließen
sich schräg aufeinander zulaufende Lippen 30, 31 an, die
die Verstärkungseinlage 27 enthalten und im Querschnitt des
thermoplastischen Materials wesentlich dünner als die
übrigen Teile des Profilstreifens ausgeführt sind. Sie sind
daher wesentlich weicher und flexibler als die übrigen Teile
des Profilstreifens, wobei ihnen die elastischen Eigenschaften der Federstahleinlage 27 dauerelastische Eigenschaften verleihen, die das Kunststoffmaterial sonst nicht
aufweist. Unter der Einwirkung einer nicht dargestellten
Gegendichtfläche können sie sich beispielsweise so verformen
wie dies gestrichelt in Fig. 3 angedeutet ist.

Bei dem Ausführungsbeispiel gemäß Fig. 3 ist vorgesehen,
daß der thermoplastische Werkstoff im Halteabschnitt 20 und
im Dichtabschnitt 21 derselbe ist und auch dieselbe Härteeinstellung aufweist. Jedoch kann auch hier, ebenso wie im
Ausführungsbeispiel gemäß Fig. 1 eine unterschiedliche Härteeinstellung vorgesehen sein.

Patentansprüche

1. Dichtstreifen, der im Querschnitt aus einem biegesteiferen Halteabschnitt (1,20) und einem flexibleren
Dichtabschnitt (2,21) zusammengesetzt ist, die zur
Übertragung der Dichtkräfte vom Dichtabschnitt auf den
Halteabschnitt fest miteinander verbunden sind und aus
thermoplastischem Werkstoff (9,13,19) mit einer metallischen Verstärkungseinlage (8) bestehen, dadurch gekennzeichnet, daß der Dichtabschnitt (2,21) eine von der
Verstärkungseinlage (8,25) des Halteabschnitts (1,20)
gesonderte, flexiblere Verstärkungseinlage (10,27) enthält und mit dieser dadurch kraftübertragend verbunden
ist, daß Teile (11,12) der beiden Verstärkungseinlagen
(8,10,25,27) innerhalb eines Verbindungsabschnitts (4,24,26)
in geringem Abstand voneinander von dem thermoplastischen
Werkstoff (13) ummantelt sind.

2. Dichtstreifen nach Anspruch 1, dadurch gekennzeichnet,
daß der mittlere Abstand der Verstärkungseinlagen voneinander in dem Verbindungsabschnitt (4,24,26) geringer
ist als ein Drittel der Länge des Verbindungsabschnitts.

3. Dichtstreifen nach Anspruch 2, dadurch gekennzeichnet,
daß die Verstärkungseinlagen (11,12,25,27) innerhalb
des Verbindungsabschnitts (4,24,26) im wesentlichen
parallel zueinander verlaufen.

...14

4. Dichtstreifen nach einem der Ansprüche 1 bis 3, dadurch gekennzeichnet, daß der Halteabschnitt (1,20) und der Dichtabschnitt (2,21) einstückig aus thermoplastischem Werkstoff geformt sind.

5. Dichtstreifen nach Anspruch 4, dadurch gekennzeichnet, daß der Halteabschnitt (1) und der Dichtabschnitt (2) Werkstoff (9,19) unterschiedlicher Härte umfassen.

6. Dichtstreifen nach einem der Ansprüche 1 bis 5, dadurch gekennzeichnet, daß mindestens ein Teil (24) des Verbindungsabschnitts (24,26) einen Teil (24) des Halteabschnitts (20) bildet.

7. Dichtstreifen nach Anspruch 6, dadurch gekennzeichnet, das der Halteabschnitt (1,20) im Querschnitt U-förmig gestaltet ist und der Verbindungsabschnitt (4,24) zumindest teilweise von einem Schenkel des Halteabschnitts gebildet ist.

8. Dichtstreifen nach Anspruch 6, dadurch gekennzeichnet, daß der Halteabschnitt (1,20) im Querschnitt U-förmig gestaltet ist und der Verbindungsabschnitt zumindest teilweise von dem Steg (5) des Halteabschnitts gebildet ist.

9. Dichtungsstreifen nach einem der Ansprüche 1 bis 8, dadurch gekennzeichnet, daß er zwischen dem Halteabschnitt (20) und dem Dichtabschnitt (21) oder als Teil (24) eines dieser Abschnitte einen Abschnitt (24,26) besonders hoher Biegesteifigkeit aufweist, wobei dieser Abschnitt als Verbindungsabschnitt ausgebildet ist.

10. Dichtstreifen nach einem der Ansprüche 1 bis 9, dadurch gekennzeichnet, daß die Verstärkungseinlagen (8,10,25,27) von einem zickzack-förmig gebogenen Metalldraht gebildet sind, dessen benachbarte Schleifen durch flexible Stränge (14) miteinander verbunden sind.

11. Dichtstreifen nach Anspruch 10, dadurch gekennzeichnet, daß die Einlagen im Verbindungsabschnitt durch flexible Stränge miteinander verbunden sind.

0086959

1/1

Fig.1

Fig.2

Fig.3

Fig.4

Fig.5

Europäisches.
Patentamt

**EUROPÄISCHER RECHERCHENBERICHT**

**0086959**
Nummer der Anmeldung

EP  83 10 0509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 349 772  (DRAFTEX) <br> * Seite  2,  Zeile 26 - Seite 4, Zeile 20; Figur 2 * <br><br> --- | 1 | B 60 R  13/06 |
| A | DE-A-1 555 134  (DRAFTEX) <br><br> * Seite  3,  Zeile 28 - Seite 4, Zeile 18; Figuren 2,6 * <br><br> --- | 1,6,7, 8 | |
| A | FR-A-2 365 685  (DRAFTEX) <br> * Seite  3,  Zeile 32 - Seite 4, Zeile 25; Figur 4 * <br><br> --- | 1,6 | |
| A | FR-A-2 292 100  (DRAFTEX) <br> * Seite  3,  Zeile 38 - Seite 6, Zeile 14; Figuren 2-6 * <br><br> --- | 1,4-8 | |
| A | DE-U-7 107 927  (HAPPICH) <br> * Zusammenfassung; Figur 1 * <br><br> --- | 1 | |
| A | FR-A-1 467 128  (LA PUBLICITE FRANCAISE) <br> * Seite  2, linke Spalte, Zeilen 15-36; Figuren 5,6 * <br><br> --- | 1 | |
| A | FR-A-2 466 362  (DRAFTEX) <br> * Seite  2,  Zeile 17 - Seite 5, Zeile 22; Figuren 1,3,4 * <br><br> ---          -/- | 1 | |

RECHERCHIERTE
SACHGEBIETE (Int. Cl. ³)

B 60 R
B 62 D
E 06 B
F 16 B

Der vorliegende Recherchenbericht wurde für alle Patentansprüche erstellt.

| Recherchenort <br> DEN HAAG | Abschlußdatum der Recherche <br> 25-05-1983 | Prüfer <br> AYITER I. |
|---|---|---|

Europäisches
Patentamt

**EUROPÄISCHER RECHERCHENBERICHT**

**0086959**
Nummer der Anmeldung

EP 83 10 0509

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 285 507  (DRAFTEX) <br> * Seite 2, Zeile 24 - Seite 3, Zeile 15; Figuren 1-3 * | 1,5 | |
| A | DE-A-2 818 225  (AUDI NSU) <br> * Seite 9, Zeilen 27-30; Seite 10, Zeilen 21-24 * | 1 | |
| A | FR-A-2 358 970  (THE STANDARD PRODUCTS) <br> * Seite 2, Zeilen 12-32; Figur 3 * | 10 | |
| A | DE-A-3 017 957  (KLEUSER) <br> * Insgesamt * | 10 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 25-05-1983 | AYITER I. |